# EUROPÄISCHE PATENTSCHRIFT

(11) **EP 2 338 207 B1**
(45) Veröffentlichungstag und Bekanntmachung des Hinweises auf die Patenterteilung: **29.06.2016**
(21) Anmeldenummer: 09783437.8
(22) Anmeldetag: 25.09.2009
(51) Int. Cl.: H01Q 1/22, G06K 19/077

(54) **RFID-TRANSPONDERANTENNE**
RFID TRANSPONDER ANTENNA
ANTENNE POUR BALISE RFID

(30) Priorität: 25.09.2008 DE 102008048948
(43) Veröffentlichungstag der Anmeldung: 29.06.2011
(73) Patentinhaber: SMARTRAC TECHNOLOGY GmbH, 01099 Dresden (DE)
(72) Erfinder: SEMAR, Robert, 01309 Dresden (DE); SCHAEFER, Michael, 01809 Burghardswalde (DE); WAGNER, Marco, 01169 Dresden (DE); PRESCHER, Henry, 01159 Dresden (DE)
(74) Vertreter: Lippert, Stachow & Partner
(86) Internationale Anmeldenummer: PCT/EP2009/062463
(87) Internationale Veröffentlichungsnummer: WO 2010/034820

(56) Entgegenhaltungen:
- EP-A- 1 742 173
- DE-A1- 19 610 284
- DE-A1- 19 912 201
- DE-C1- 19 848 821
- HAGHIRI YAHYA ET AL: "Vom Plastik zur Chipkarte; 7.2 Kontaktlose Chipkarte" VOM PLASTIK ZUR CHIPKARTE: WEGWEISER ZUM AUFBAU UND ZURHERSTELLUNG VON CHIPKARTEN, XX, XX, 1. Januar 1999 (1999-01-01), Seiten 181-192, XP002364832

## Beschreibung

Die Erfindung betrifft eine Transponderantenne, insbesondere zur Verwendung in RFID (Radio Frequency Identification) Transpondern, welche üblicherweise eine auf einem Trägersubstrat oder in einem Gehäuse angeordnete Antenne sowie eine mit der Antenne verbundene integrierte Schaltung, meist in Form eines Halbleiterbauelements, aufweisen. In einigen Fällen ist zusätzlich eine Batterie zur Energieversorgung vorgesehen.

Nach der Frequenz der Datenübertragung vom und zum integrierten Schaltkreis unterscheidet man prinzipiell zwischen HF- und UHF-Transpondern, wobei für HF-Transponder üblicherweise ebene Spulenantennen (sogenannte Rahmenantennen) verwendet werden.

Bei derartigen Spulenantennen gibt es stets einen Bereich, in welchem die die Antenne bildende Leiterbahn die durch sie selbst gebildeten Spulenwindungen kreuzt, damit die beiden Enden der Leiterbahn mit den Anschlüssen des integrierten Schaltkreises verbunden werden können. Zur Vermeidung von Kurzschlüssen müssen die sich kreuzenden Leiterbahnabschnitte elektrisch voneinander isoliert werden. Handelt es sich um eine in Drahtlegetechnik hergestellte Antenne, so kann dies beispielsweise durch Verwendung eines Lackdrahts erreicht werden.

Bei Antennenstrukturen, die durch additive Verfahren (z.B. durch Drucken) oder durch subtraktive Verfahren (z.B. selektives Ätzen einer Metallschicht) auf einem nichtleitenden Trägersubstrat hergestellt werden, wird die Antenne hingegen meist zweiteilig ausgeführt.

Beispielsweise können die Spulenwindungen auf einer ersten Seite des Trägersubstrats und eine die Spulenwindungen kreuzende Brücke angeordnet sein, wobei die beiden Enden der Brücke durch das Trägersubstrat hindurch mit einem Ende der die Spulenwindungen bildenden Leiterbahn einerseits und einem Kontaktterminal für den Anschluss des integrierten Schaltkreises andererseits elektrisch verbunden werden. Dies kann beispielsweise durch Vias oder durch mechanisches Verbinden, z.B. Prägen erfolgen. Beim mechanischen Verbinden (Prägen) wird das nichtleitende Trägersubstrat lokal durchbrochen, so dass in diesem Bereich ein elektrischer Kontakt zwischen den beiden auf je einer Seite des Trägersubstrats angeordneten Leiterbahnstrukturen hergestellt wird.

Die Brücke kann jedoch auch auf derselben Seite des Trägersubstrats angeordnet werden wie die die Spulenwindungen bildende Leiterbahn. Soll die Brücke in einem additiven Verfahren direkt aufgebracht werden, so muss auch hier die elektrische Isolierung zwischen den Spulenwindungen und der Brücke sichergestellt sein. Dies kann beispielsweise dadurch erfolgen, dass der Bereich, in welchem die Brücke die Spulenwindungen kreuzen soll, zunächst mit einer Isolationspaste überdruckt wird und erst anschließend eine die Brücke bildende Leiterbahn aufgedruckt wird.

Alternativ kann die Brücke auch mit Hilfe eines zusätzlichen Hilfssubstrats hergestellt werden. Dabei wird ein Leiterzug, der später die Brücke bilden soll, auf das Hilfssubstrat aufgebracht, beispielsweise durch Bedrucken mit einer Leitpaste. Anschließend wird das Hilfssubstrat kopfüber auf das Trägersubstrat gelegt, so dass die die Brücke bildende Leiterbahn die Spulenwindungen kreuzt. Anschließend werden die beiden Enden der Brücke mit einem Ende der die Spulenwindungen bildenden Leiterbahn einerseits und einem Kontaktterminal für den Anschluss des integrierten Schaltkreises andererseits elektrisch verbunden. Dies kann beispielsweise durch Ultraschallschweißen geschehen. Auch hier muss zwischen der die Brücke bildenden Leiterbahn auf dem Hilfssubstrat und der die Spulenwindungen bildenden Leiterbahn auf dem Trägersubstrat eine Isolationsschicht vorgesehen sein, welche beispielsweise durch Bedrucken mit einer Isolationspaste hergestellt werden kann. Dabei kann die Isolationsschicht vor dem Auflegen des Hilfssubstrats auf das Trägersubstrat entweder auf dem Hilfssubstrat oder auf dem Trägersubstrat angeordnet werden, beispielsweise durch Bedrucken mit einer Isolationspaste.

Bei dem letztgenannten Typ von RFID-Transponderantennen stellt sich das Problem, dass diese für viele Anwendungsfälle nicht hinreichend flexibel sind. Wird ein derartiger Transponder, der in ein Etikett oder eine Karte eingefügt ist, stark gebogen, so werden das Trägersubstrat und das Hilfssubstrat unterschiedlich stark gedehnt. Dadurch kann es zum Ablösen der Brücke kommen, wodurch der Transponder beschädigt und damit unbrauchbar wird. Eine Beschädigung oder Beeinträchtigung des Transponders entsteht auch hinsichtlich der Veränderung seiner elektrischen Eigenschaften infolge der mechanischen Beanspruchung derart, dass sich durch die Belastung die isolierende Brücke in ihrer elektrischen Wirkung als Kapazität ändert.

Aus EP 1 742 173 A2 ist eine Transponderkarte bekannt, bei der auf einer Trägerschicht eine Antennenspule aufgebracht ist. Darüber ist eine - bis auf eine Chipmodulöffnung - vollflächige Ausgleichsschicht auf der Antennenspule angeordnet. Über der Ausgleichsschicht ist eine Antennenbrücke vorgesehen, die durch Aufdrucken auf die bereits mit der Trägerschicht verbundene Ausgleichsschicht hergestellt ist.

DE 196 10 284 A1 beschreibt eine Antennenspule gebildet mit wenigstens einer Spulenwindung bei der wenigstens eine Seite der Spule mit einer leitenden, im wesentlichen den Bereich der Spulenwindung(en) abdeckenden und eine offene Schleife bildenden Abschirmung versehen ist.

Es besteht daher ein Bedürfnis nach einer technischen Lösung für diesen Typ von RFID-Transpondern, welche die mechanische Beständigkeit insbesondere hinsichtlich Biegebeanspruchungen verbessert.

Diese Aufgabe wird gelöst durch eine RFID-Transponderantenne mit den Merkmalen des unabhängigen Anspruchs 1. Vorteilhafte Ausgestaltungen und Weiterbildungen sind in den abhängigen Ansprüchen beschrieben.

Zur Lösung dieser Aufgabe wird bei einer RFID-Transponderantenne mit einem Trägersubstrat und einem Hilfssubstrat, wobei auf dem Trägersubstrat eine Kontaktinsel für einen ersten Anschluss eines integrierten Schaltkreises sowie eine mindestens zwei Spulenwindungen bildende erste Leiterbahnstruktur angeordnet sind, deren erstes Ende ein Kontaktterminal für einen zweiten Anschluss des integrierten Schaltkreises bildet und deren anderes Ende eine Verbindungsstelle zur elektrischen Verbindung mit einer zweiten Leiterbahn bildet, und wobei auf dem Hilfssubstrat eine zweite Leiterbahn angeordnet ist, die eine Brücke über die Spulenwindungen bildet und deren eines Ende mit der Kontaktinsel und deren anderes Ende mit der Verbindungsstelle elektrisch verbunden ist, wobei an mindestens einer zwischen den beiden Enden des Hilfssubstrats liegenden Stelle eine unlösbare Verbindung zwischen Hilfssubstrat oder/und zweiter Leiterbahn einerseits und Trägersubstrat oder/und erster Leiterbahn andererseits vorgesehen ist, vorgeschlagen, dass auf dem Trägersubstrat mindestens eine Stützstruktur zwischen zwei benachbarten durch die ersten Leiterbahnen gebildeten Spulenwindungen angeordnet ist, welche eine Materialinsel ist, die aus demselben Material wie die erste Leiterbahn besteht und gleichzeitig mit dieser hergestellt wurde, und dass die Stützstruktur mit der zweiten Leiterbahn stoffschlüssig durch Schweißen verbunden ist.

Unter einer Kontaktinsel im obigen Sinne soll ein leitendes Gebilde verstanden werden, welches einerseits ein Kontaktterminal für den ersten Anschluss des integrierten Schaltkreises und andererseits eine Verbindungsstelle für die zweite Leiterbahn bereitstellt. Demgemäß sind von diesem Begriff sowohl Ausgestaltungen umfasst, bei denen eine kompakte Materialinsel gleichzeitig den Anschluss des integrierten Schaltkreises und der zweiten Leiterbahn ermöglichen, als auch Leiterbahnen mit zwei Enden, von denen eines als Kontaktterminal für den ersten Anschluss des integrierten Schaltkreises und das andere als Verbindungsstelle für die als Brücke wirkende zweite Leiterbahn dient. Bei der letztgenannten Ausführung ist ein größerer Abstand zwischen der Brücke und dem integrierten Schaltkreis realisierbar als bei der zuerst genannten Ausgestaltung. Der Chiplandeplatz ist damit nicht an die Nähe zur Brücke gekoppelt.

Stoffschlüssige Verbindungen sind Verbindungen, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen, und lassen sich durch Schweißen herstellen.

Die vorgeschlagene RFID-Transponderantenne zeichnet sich dadurch aus, dass das Hilfssubstrat auch zwischen den beiden elektrischen Verbindungen zur Kontaktinsel und zur Verbindungsstelle mechanisch mit dem Trägersubstrat verbunden wird. Durch diese Verbindung, die im Bereich zwischen den beiden elektrischen Anschlusspunkten des Hilfssubstrats an das Trägersubstrat angeordnet ist und die punktförmig oder flächig sein kann, wird erzwungen, dass sich beide Substrate im Falle von Biegebeanspruchungen ähnlich verhalten, so dass ein Ablösen der Brücke und damit die Beschädigung oder Zerstörung der Antenne verhindert wird.

Zur Herstellung dieser unlösbaren Verbindung zwischen Hilfssubstrat und Trägersubstrat werden nachfolgend mehrere technische Lösungen erläutert.

Auf dem Trägersubstrat ist mindestens eine Stützstruktur angeordnet, welche mit der zweiten Leiterbahn stoffschlüssig verbunden ist. Unter einer Stützstruktur soll dabei jede auf dem Trägersubstrat angebrachte Struktur verstanden werden, die geeignet ist, eine stoffschlüssige Verbindung zwischen Hilfssubstrat oder/und erster Leiterbahn einerseits und Trägersubstrat oder/und zweiter Leiterbahn andererseits zu ermöglichen.

Die Stützstruktur ist eine zwischen zwei benachbarten Spulenwindungen angeordnete Materialinsel, die aus demselben Material wie die erste Leiterbahn besteht und gleichzeitig mit dieser hergestellt wurde. Wird die erste Leiterbahn, welche die Spulenwindungen bildet, in einem additiven Verfahren erzeugt, so kann in demselben Verfahren, beispielsweise beim Drucken mit einer metallischen Leitpaste, zwischen zwei benachbarte Spulenwindungen eine Materialinsel, d.h. ein flächiges Gebilde aus derselben metallischen Leitpaste gedruckt werden. Der Abstand der benachbarten Spulenwindungen zueinander ist gegebenenfalls größer als üblich auszuführen, um den für die Materialinsel benötigten Platz zu schaffen. Selbstverständlich können zwischen den beiden elektrischen Anschlusspunkten der Brücke auch mehrere derartige Materialinseln angeordnet werden, um die Festigkeit der unlösbaren Verbindung zu erhöhen. Die Verbindung zwischen der Materialinsel und der zweiten Leiterbahn kann mit bekannten Verfahren, beispielsweise durch Ultraschall-Schweißen durchgeführt werden, so dass an der Stelle der Materialinsel eine unlösbare Verbindung entsteht.

Nachfolgend wird die vorgeschlagene RFID-Transponderantenne anhand eines Ausführungsbeispiels und einer zugehörigen Zeichnungen näher erläutert. Dabei zeigen
Fig. 1 eine RFID-Transponderantenne nach dem Stand der Technik, und
Fig. 2 eine RFID-Transponderantenne gemäß einem Ausführungsbeispiel der Erfindung.

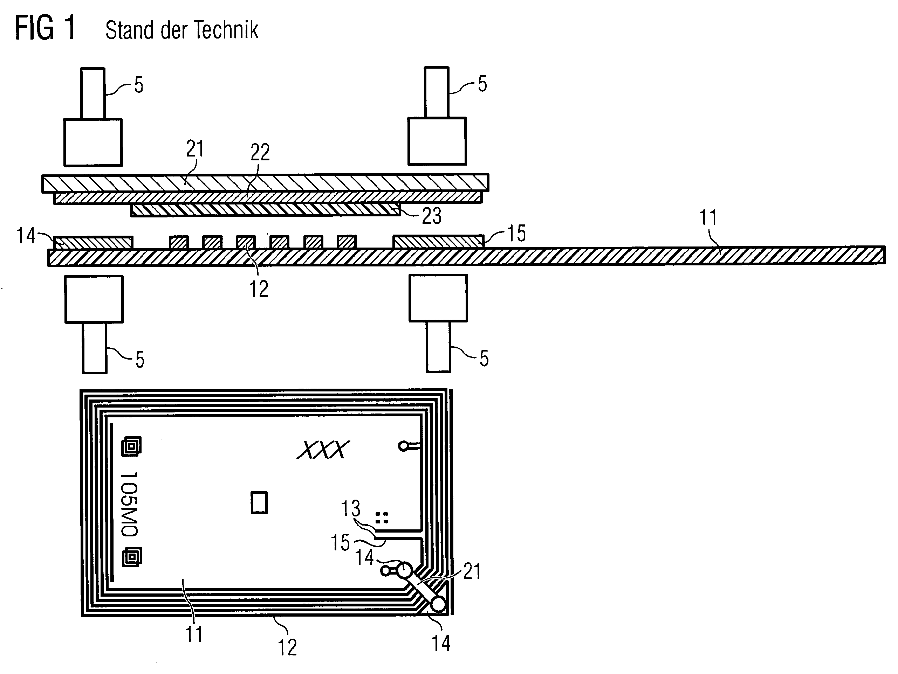

In Fig. 1 ist eine bekannte RFID-Transponderantenne dargestellt, bei der auf einem Trägersubstrat 11 eine erste Leiterbahn 12 mit einer Verbindungsstelle 14, die mehrere Spulenwindungen bildet, sowie eine Kontaktinsel 15, deren eines Ende eine Verbindungsstelle 14 bildet und deren anderes Ende ein Kontaktterminal 13 für einen integrierte Schaltkreis bildet, angeordnet sind. Zwischen den beiden Verbindungsstellen 14 erstreckt sich die auf einem Hilfssubstrat 21 angeordnete zweite Leiterbahn 22, deren Enden mit den beiden Verbindungsstellen 14 elektrisch verbunden ist. In der Querschnittsdarstellung sind die Schweißorgane 5 einer Einrichtung zum Ultraschallschweißen dargestellt, welche den elektrischen Kontakt an diesen Stellen erzeugen. Auf der zweiten Leiterbahn 22, die auf dem Hilfssubstrat 21 angeordnet ist, ist eine Isolierschicht 23 angeordnet, damit die Spulenwindungen der ersten Leiterbahn 12 nicht durch die zweite Leiterbahn 22 kurzgeschlossen werden.

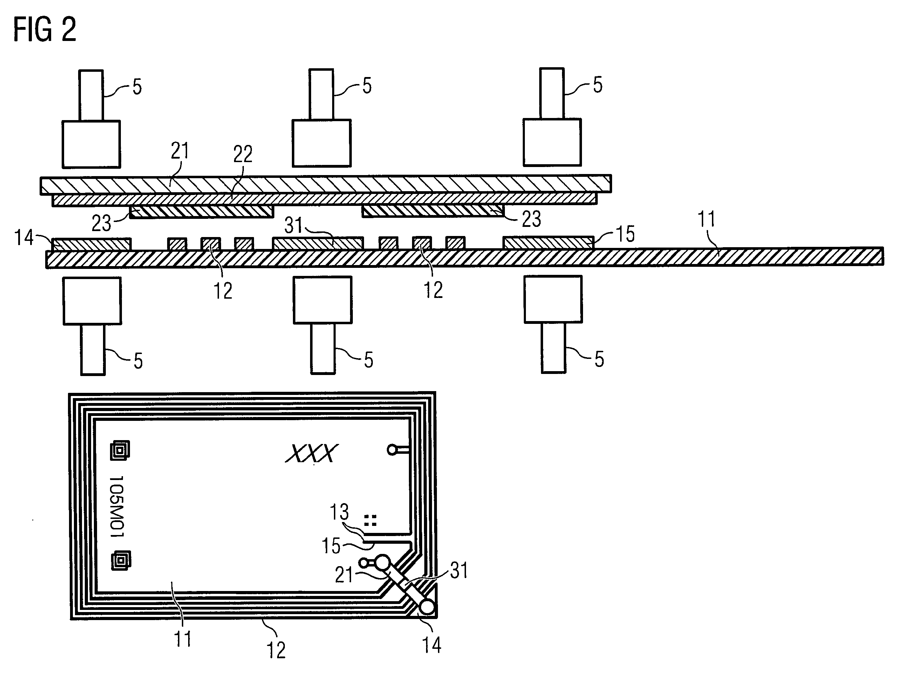

Bei dem in Fig. 2 dargestellten Ausführungsbeispiel der erfindungsgemäßen Lösung ist der Abstand zwischen zwei benachbarten Spulenwindungen vergrößert ausgeführt, so dass Platz für eine zusätzliche stoffschlüssige Verbindung entsteht. Hierzu ist zwischen diesen benachbarten Spulenwindungen eine Stützstruktur 31 in Form einer Metallinsel angeordnet, welche durch Ultraschallschweißen mittels zusätzlicher Schweißorgane 5 mit der zweiten Leiterbahn 22 verbunden wird. Da die Stützstruktur 31 keine Verbindung zur ersten Leiterbahn 12 hat und die zweite Leiterbahn 22 im Bereich zwischen den Verbindungen zur Verbindungsstelle 14 der ersten Leiterbahn 12 und der Kontaktinsel 15 sowie der Stützstruktur 31 durch Isolierschichten 23 abgedeckt ist, kann kein Kurzschluss der Spulenwindungen entstehen.

### RFID-Transponderantenne

### Bezugszeichenliste

- 11: Trägersubstrat
- 12: erste Leiterbahn
- 13: Kontaktterminal
- 14: Verbindungsstelle
- 15: Kontaktinsel
- 21: Hilfssubstrat
- 22: zweite Leiterbahn
- 23: Isolierschicht
- 31: Stützstruktur
- 5: Schweißorgan

## Patentansprüche

1. RFID-Transponderantenne mit einem Trägersubstrat (11) und einem Hilfssubstrat (21), wobei auf dem Trägersubstrat (11) eine Kontaktinsel (15) für einen ersten Anschluss eines integrierten Schaltkreises sowie eine mindestens zwei Spulenwindungen bildende erste Leiterbahnstruktur (12) angeordnet sind, deren erstes Ende ein Kontaktterminal (13) für einen zweiten Anschluss des integrierten Schaltkreises bildet und deren anderes Ende eine Verbindungsstelle (14) zur elektrischen Verbindung mit einer zweiten Leiterbahn (22) bildet, und wobei auf dem Hilfssubstrat (21) eine zweite Leiterbahn (22) angeordnet ist, die eine Brücke über die Spulenwindungen ausbildet und deren eines Ende mit der Kontaktinsel (15) und deren anderes Ende mit der Verbindungsstelle (14) elektrisch verbunden ist, wobei an mindestens einer zwischen den beiden Enden des Hilfssubstrats (21) liegenden Stelle im Bereich der ersten Leiterbahnen (12) eine unlösbare Verbindung zwischen Hilfssubstrat (21) oder/und zweiter Leiterbahn (22) einerseits und Trägersubstrat (11) oder/und erster Leiterbahn (12) andererseits vorgesehen ist, **dadurch gekennzeichnet, dass** auf dem Trägersubstrat (11) mindestens eine Stützstruktur (31) zwischen zwei benachbarten durch die ersten Leiterbahnen (12) gebildeten Spulenwindungen angeordnet ist, welche eine Materialinsel ist, die aus demselben Material wie die erste Leiterbahn (12) besteht und gleichzeitig mit dieser hergestellt wurde, und dass die Stützstruktur (31) mit der zweiten Leiterbahn (22) stoffschlüssig durch Schweißen verbunden ist.

2. RFID-Transponderantenne nach Anspruch 1, **dadurch gekennzeichnet, dass** mehrere Stützstrukturen (31) jeweils zwischen zwei benachbarten durch die ersten Leiterbahnen (12) gebildeten Spulenwindungen angeordnet sind, welche Materialinseln sind und mit der zweiten Leiterbahn (22) stoffschlüssig verbunden sind.

## Claims

1. RFID transponder antenna comprising a carrier substrate (11) and an auxiliary substrate (21), wherein there are arranged on the carrier substrate (11) a contact island (15) for a first connection of an integrated circuit and also a first conductor track structure (12) forming at least two coil turns, the first end of which conductor track structure forms a contact terminal (13) for a second connection of the integrated circuit and the other end of which conductor track structure forms a connection location (14) for electrical connection to a second conductor track (22), and wherein there is arranged on the auxiliary substrate (21) a second conductor track (22), which forms a ridge over the coil turns and one end of which is electrically connected to the contact island (15) and the other end of which is electrically connected to the connection location (14), wherein a non-releasable connection between auxiliary substrate (21) or/and second conductor track (22), on the one hand and carrier substrate (11) or/and first conductor track (12) on the other hand is provided at at least one location lying between the two ends of the auxiliary substrate (21) in the region of the first conductor tracks (12), **characterized in that** on the carrier substrate (11) at least one supporting structure (31) is arranged between two adjacent coil turns formed by the first conductor tracks (12), said at least one supporting structure being a material island which consists of the same material as the first conductor track (12) and was produced simultaneously therewith, and **in that** the supporting structure (31) is cohesively connected to the second conductor track (22) by welding.

2. RFID transponder antenna according to Claim 1, **characterized in that** a plurality of supporting structures (31) are arranged in each case between two adjacent coil turns formed by the first conductor tracks (12), said supporting structures being material islands and being cohesively connected to the second conductor track (22).

## Revendications

1. Antenne de transpondeur RFID comprenant un substrat porteur (11) et un substrat auxiliaire (21), un îlot de contact (15) pour une première connexion d'un circuit intégré ainsi qu'une première structure de pistes conductrices (12) formant au moins deux spires de bobine étant disposées sur le substrat porteur (11), dont la première extrémité forme une borne de contact (13) pour une deuxième connexion du circuit intégré et dont l'autre extrémité un point de liaison (14) servant à l'alimentation électrique avec une deuxième piste conductrice (22), et une deuxième piste conductrice (22) étant disposée sur le substrat auxiliaire (21), laquelle forme un pont au-dessus des spires de bobine et dont une extrémité est reliée électriquement à l'îlot de contact (15) et l'autre extrémité au point de liaison (14), une liaison inamovible entre le substrat auxiliaire (21) et/ou la deuxième piste conductrice (22) d'un côté et le substrat porteur (11) et/ou la première piste conductrice (12) d'un autre côté se trouvant dans la zone des premières pistes conductrices (12) en au moins un endroit situé entre les deux extrémités du substrat auxiliaire (21), **caractérisée en ce que** sur le substrat porteur (11) est disposée au moins une structure d'appui (31) entre deux spires de bobine voisines formées par les premières pistes conductrices (12), laquelle est un îlot de matière qui se compose de la même matière que la première piste conductrice (12) et a été fabriquée simultanément avec celle-ci, et **en ce que** la structure d'appui (31) est reliée à la deuxième piste conductrice (22) par liaison de matières par soudage.

2. Antenne de transpondeur RFID selon la revendication 1, **caractérisée en ce que** plusieurs structures d'appui (31) sont respectivement disposées entre deux spires de bobine voisines formes par les premières pistes conductrices (12), lesquelles sont des îlots de matière et sont reliées par liaison de matières avec la deuxième piste conductrice (22).
